# EUROPEAN PATENT APPLICATION

(11) **EP 4 098 689 A1**
(43) Date of publication of application: **07.12.2022**
(21) Application number: 21177212.4
(22) Date of filing: 01.06.2021
(51) Int. Cl.: C08J 11/08

(54) **ENERGY EFFICIENT SEPARATION OF POLYOLEFINS**

(71) Applicant: Nederlandse Organisatie voor toegepast- natuurwetenschappelijk onderzoek TNO, 2595 DA 's-Gravenhage (NL)
(72) Inventor: VAN DER MEER, Johannes, 2595 DA 's-Gravenhage (NL); KWAKERNAAT, Lauran, 2595 DA 's-Gravenhage (NL); PRINS, Lucie, 2595 DA 's-Gravenhage (NL); GEERS, Leonard Ferdinand Gerard, 2595 DA 's-Gravenhage (NL); VAN DE RUNSTRAAT, Annemieke, 2595 DA 's-Gravenhage (NL); ROELANDS, Cornelis Petrus Marcus, 2595 DA 's-Gravenhage (NL)
(74) Representative: V.O.

(57) **Abstract**

The invention is in the field of recycling plastic waste. In particular, the invention is directed to a method separate polyolefins from plastic waste based on a dissolution/precipitation approach. The method according to the present invention may be used to separate polyolefins with a high selectivity by using at least a first and a second cooling surface. The invention is particularly suitable to at least partially separate LLDPE and LDPE or polypropylene and polyethylene from plastic waste.

## Description

The invention is in the field of recycling plastic waste. In particular, the invention is directed to a method to separate polyolefins from plastic waste.

Plastics typically mainly comprise polymers derived from fossil fuel based petrochemicals. It is generally acknowledged that it is not ideal to use fossil fuel based materials and therefore alternatives are sought after. Possible alternatives include synthesizing plastics from renewable materials and/or to recycle the plastics.

Furthermore, recycling may be preferred as it is acknowledged that plastic waste has a negative impact on the environment. Therefore, a current interest lies within a circular economy (*i.e.* a system of closed loops in which renewable sources are used and used materials lose their value as little as possible). To achieve a circular economy it is essential that substances are recycled.

Typical conventional recycling processes start after a product has reached its end-of-life and is considered waste. The waste is collected and sorted. Sorting typically comprises mechanical sorting first by type of material (*e.g.* plastics, paper), after which the separate plastics stream is sorted by type of polymer, for instance using infrared spectroscopy. This results in several mono streams and a waste stream. A mono stream ideally comprises one type of polymer or a plurality of similar types of polymers, for instance PET (polyethylene terephthalate). The purity of the mono streams is typically not above 94%, so for some applications, further processing of this recyclate may be necessary to comply with the requirements for reuse. In addition, the sorting process may only have limited yield as the majority of the waste often ends up in the waste stream.

Further processing of mono streams to meet requirements for reuse starts with shredding and washing the recyclate, followed by extrusion or pelletization for reuse in new products. However, the quality of the recyclate is typically not sufficient (*i.e.* comparable to virgin polymer). In particular, plastics that comprise a plurality of similar types of polymers that are not easily mechanically separated, such as multilayered films containing polyolefins, form a challenge to be recycled.

There are several disclosures describing methods to separate polymers, especially polyolefins, from polymer mixtures such as plastics.

A first example is by Hadi et al. (APCBEE Procedia 3, 2012, 281-286). Hadi *et al.* describe a method wherein plastic waste comprising low-density polyethylene (LDPE), high-density polyethylene (HDPE) or polypropylene (PP) is dissolved, filtered and the polymers precipitated by using a non-solvent.

WO2018/068973 discloses a similar method for separating polymers from a multilayered plastic, wherein the layers comprise different polymers. However, using a non-solvent is typically not desirable as it requires an additional purification step to separate the solvents. Furthermore, the selectivity of these methods is typically not high enough to achieve separation of polymers that have similar properties.

DE19905029 discloses a method for the separation of polyolefins using liquid-liquid extraction. This method also does not provide a high selectivity.

Another method is disclosed in WO91/03515 where polymers in plastics are separated based on selective dissolution. This entails the dissolution of a first polymer comprised in the plastic waste in a specific solvent at a specific temperature. This solution is then separated from the remaining solid waste and the process is repeated in a fresh solvent for a second polymer comprised in the remaining solid waste. A similar method is described in DE 102016015199. A drawback is that polymers with similar properties, in particular, similar solubility may not be separated.

An alternative is provided in WO07/7082 where a material comprising a mixture of polymers is brought in contact with a solvent to dissolve at least one of the polymer types. The polymers are separated by one or multiple precipitation steps using shearing, wherein each step may include several cooling steps to cool the solution. However, this requires a plurality of steps and selectivity is limited, as is shown by the example of separation of linear-low density polyethylene (LLDPE) and low density polyethylene (LDPE).

It is an object of the present inventors to provide another and preferably improved method for at least partially separating polyolefins from plastic waste that overcomes at least part of the above-mentioned drawbacks. In particular, the method according to the present invention may be used to separate polyolefins with high selectivity. The present inventors surprisingly found that a method based on a dissolution/precipitation approach comprising at least a first and a second cooling surface for the precipitation to allow for such a high selectivity.
Figure 1 illustrates a system that is suitable to be used in the method according to the present invention.
Figure 2 illustrates the precipitation of LLDPE and LDPE at several temperatures in MBTE.
Figure 3 illustrates the precipitation of LLDPE and
LDPE at several temperatures in cyclopentane.

Thus, in a first aspect the invention is directed to a method for at least partially separating a first and a second polyolefin from plastic waste, wherein said method comprises:
- dissolving the first and second polyolefin in a first solvent at an elevated temperature to obtain a polyolefin solution;
- cooling the polyolefin solution using at least a first and a second cooling surface, wherein the first cooling surface has a lower temperature than the precipitation temperature of the first polyolefin and wherein the second cooling surface has a higher temperature than the precipitation temperature of the first polyolefin;

- precipitating the first polyolefin on the first cooling surface;
- separating the precipitated first polyolefin from the polyolefin solution to obtain a first-polyolefin rich fraction and a second-polyolefin rich fraction.

The first and second polyolefin are contained by plastic waste. This plastic waste is typically provided after it has been mechanically separated and provided as a mono stream. The plastic waste may further be subjected to a pre-treatment step either before and/or just after dissolving the first and second polyolefin. This pre-treatment step may for instance remove color impurities. This can be achieved by *e.g.* an absorption step, such as absorption on a packed bed of activated carbon. Preferably the plastic waste comprises multi-material composites, such as a multilayered film. It is particularly preferred that the plastic waste is according to the DKR-310 standard. The DKR standard is established by the German "Deutsche Gesellschaft fur Kreislaufwirtschaft und Rohstoffe mbH (DKR)".

Plastic waste according to the DKR-310 standard comprises foils consisting of at least 92% of one specific polymer type. According to the standard, the foils should have a surface area larger than DIN A4, like plastic bags and wrapping foils.

The provided plastic waste may further comprise a non-soluble fraction. This fraction may for instance comprise other insoluble polymers such as PET, minerals or small metal particles. Accordingly, the method preferably further comprises removing the non-soluble fraction from the polyolefin solution, typically before cooling the polyolefin solution. This may allow for a higher purity of the obtained fractions. Removal of the non-soluble fraction can be achieved by any means known in the art, such as filtration.

After the polyolefins are dissolved in the solvent at an elevated temperature (*vide infra*), the solution is cooled. Cooling of the polyolefin solution may allow for the polyolefin solution to become saturated with polyolefin. If the temperature of the polyolefin solution has reached the precipitation temperature of the first polyolefin, the solution the first polyolefin starts to precipitate out of the solution. The precipitation temperature is accordingly defined as the temperature at which the corresponding polymer starts to precipitate out of the solution.

During at least part of the method it is preferred to provide a continuous circulation in the polyolefin solution, for instance by stirring. This is typically preferred during dissolution of the polyolefins as this enhances dissolution. Further, continuous stirring may be preferred when precipitating the first polyolefin to allow for the continuous supply of solution. Continuous stirring could accordingly improve the purity of the obtained fractions.

Cooling of the polyolefin solution is achieved by using at least a first and a second cooling surface. The first and second cooling surfaces are preferably cooled by a cooling fluid, such as water, that flows by the surfaces. The first cooling surface has a temperature that is below the precipitation temperature of the first polyolefin. By having a cooling surface that has a temperature below this precipitation temperature the first polyolefin tends to precipitate on and/or near this cooling surface. The second polyolefin typically has a precipitation temperature that is sufficiently far removed from the precipitation temperature of the first polyolefin. Accordingly, the second polyolefin typically remains in the solution.

Due to the higher temperature of the second cooling surface (*i.e.* above the precipitation temperature of the first polyolefin) the second cooling surface is typically free of precipitation of the first polyolefin. In other words, the first polyolefin typically does not precipitate on and/or near the second cooling surface. Without wishing to be bound by theory, it is believed that the second cooling surface may only serve as a cooler for the bulk, while the first cooling surface may be considered as a nucleation site for precipitation.

In particular, it is preferred that the temperature of the first cooling surface is between 5-10 °C below the precipitation temperature of the first polyolefin. The temperature of the second cooling surface is above the precipitation temperature. This difference in temperature may be considered optimal for the first polyolefin to precipitate on and/or near the first cooling surface and only minimally on and/or near the second cooling surface. Further, the temperature of the second cooling surface is typically low enough to allow for the bulk to cool to a temperature at which the first polyolefin precipitates. The specific preferred temperature may however depend on the presence of other components, such as minor impurities.

Further, it is preferred that the at least first and second cooling surfaces have different surface areas. Having different surface areas does not exclude the possibility that the surfaces have the same shape, such as cylindrical. It is further preferred that the surface area of the first cooling surface is smaller than the surface area of the second cooling surface. The area ratio of the first and second cooling surfaces is typically smaller than 1:2, preferably smaller than 1:5, such as 1:7. The area ratio may further distinguish the functions of the first and second cooling surface.

As the first polyolefin precipitates it may be easily separated from the remainder of the polyolefin solution. For instance, the remainder of the polyolefin solution can be drained or the precipitated first polyolefin may be taken out of the remainder of the solution. By separating the first polyolefin from the remainder of the solution, a second-polyolefin rich fraction and a first-polyolefin rich fraction is obtained.

The purity of the first- and second-polyolefin rich fraction typically depends *i.a.* on the specific ratio of the first and second polyolefin in the plastic waste. For instance, if the starting weight ratio is 50/50 LDPE and LLDPE, a plastic of at least 70% w/w, such as 80% w/w LLDPE can be achieved, based on the total weight of the plastic. The second-polyolefin rich fraction may then have a corresponding purity of at least 70% w/w, such as 80% w/w LDPE based on the total weight of the fraction. These purities are generally considered sufficient for further processing into new materials and articles. The exact required purity to be sufficient for further processing may depend on the final application. For certain application the purity is preferably sufficiently high that the obtained fractions may be interchangeably used with virgin materials.

The first-polyolefin rich fraction may for instance be a solid fraction or a slurry. The method accordingly preferably further comprises recovering the first polyolefin from the first-polyolefin rich fraction. This is typically achieved by dissolving the first-polyolefin rich fraction in a second solvent at an elevated temperature. The second solvent is preferably substantially removed, for instance up to 90%, preferably up to 95%, more preferably up to 99% based on the total weight of the first-polyolefin rich fraction. This typically yields a solid first polyolefin. The first-polyolefin rich fraction possibly comprises a residual amount of the first solvent. This first solvent may also be substantially removed simultaneously with the substantial removal of the second solvent. The second solvent can be identical or different from the first solvent.

The second-polyolefin rich fraction is typically a solution or a liquid fraction, but it may also be a slurry. The method preferably further comprises recovering the second polyolefin from the second-polyolefin rich fraction. In particular, the recovering may be achieved by substantially removing the first solvent. The first solvent may for instance be removed up to 90%, preferably up to 95%, more preferably up to 99% based on the total weight of the second-polyolefin rich fraction, to preferably yield a solid second polyolefin.

The first and/or second solvent can be removed in various ways known in the art, such as lyophilization, solute precipitation and evaporation. It may be appreciated that a combination of methods may also be employed. It is typically preferred to at least substantially remove the first and/or second solvent by evaporation. Evaporation is preferred as the first and/or second solvent are typically low-boiling solvents. Due to the preferred low boiling point of the first solvent, little energy is required to evaporate the first and/or second solvent. The term low-boiling solvent is herein used for solvents that have a boiling point below 150 °C, preferably below 100 °C, more preferably below 60 °C.

It is further preferred that the first and/or second solvent is an apolar low-boiling solvent. The apolarity of the solvent may allow for a more successful dissolution of the polyolefins. In the art, solvents having no dipole moment are considered apolar solvents, while polar solvents are solvents which do have a dipole moment. Therefore highly symmetrical molecules and aliphatic hydrocarbons that have no dipole moment and are considered apolar (see *e.g.* Wypych, G., Handbook of Solvents, Toronto-New York, 2001). Examples of apolar low-boiling solvents are accordingly methyl-tert-butylether (MBTE) and cyclopentane. It was surprisingly found that the difference of precipitation temperatures of the first and second polyolefin in these solvents is particularly high and that these solvents are thus particularly favorable to allow for the separation of polyolefins. For instance, the difference between precipitation temperatures of the first and second polyolefin is at least 5 °C, such as at least 10 °C in the solvent. It is therefore preferred that the first and/or second solvent is selected from the group consisting of MTBE and cyclopentane.

The dissolution of the first and second polyolefin in the first solvent is performed at an elevated temperature (*i.e.* above 20 °C). A higher temperature typically accelerates the dissolution of the polyolefins. Similarly, the preferred dissolution of the first-polyolefin rich fraction in a second solvent is also performed at an elevated temperature.

However, as the boiling temperature of the first and/or second solvent is preferably low (*e.g*. below 60 °C), it is possible that the solvent cannot be heated at ambient pressure to a temperature sufficiently high for the polyolefins to dissolve before reaching its boiling point. Accordingly, it is preferred to perform the dissolution/precipitation procedure under elevated pressure.

To further enhance the separation of the polyolefins it may be preferred to add an anti-solvent before and/or during cooling of the polyolefin solution. It is well known in the art that the addition of an anti-solvent can enhance the precipitation of a solute. The anti-solvent typically decreases the solvent ability of the solute and thus the solute (*i.e.* the polyolefin) can precipitate more easily out of solution. Examples of suitable anti-solvents are polar anti-solvents, for instance lower alcohols such as methanol, ethanol and ketones such as acetone. Anti-solvents such as n-hexane, may also suffice.

As mentioned above, the plastic waste preferably adheres to the DKR310 standard. This standard is used for foils that may for instance comprise a mixture of linear low-density polyethylene (LLDPE), low-density polyethylene (LDPE). The present inventors have surprisingly found that the method according to the present invention allows for, at least, partial separation of LLDPE from LDPE. The plastic waste may further comprise some traces of polypropylene (PP), polyethylene terephthalate (PET) and/or high density polyethylene (HDPE).

Accordingly, in a preferred embodiment the first polyolefin is LLDPE and the second polyolefin is LDPE. LDPE generally comprises more branched PE than LLDPE and a higher precipitation temperature. Alternatively, if polypropylene is present, this may be the first polyolefin and a polyethylene, such as LLDPE, may be the second polyolefin. The method may also be subsequently used to at least partially separate more than two polyolefins comprised in plastic waste. The second-polyolefin rich fraction may for instance comprise the second polyolefin and a third polyolefin. This second-polyolefin rich fraction may accordingly be used as the input for the method according to the present invention.

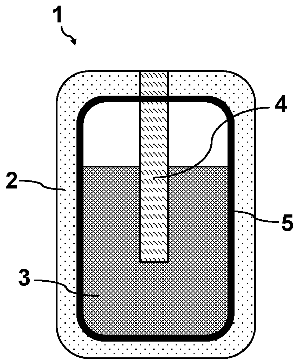

The method may be carried out in a system (1) comprising a vessel (2) for holding a polyolefin solution (3), a first cooling surface (4) and a second cooling surface (5) as depicted in Figure 1. The first cooling surface is preferably at least partially submerged in the polyolefin solution and the second cooling surface at least partially, preferably entirely surrounds the polyolefin solution. It may be appreciated that for large vessels, multiple first cooling surfaces may be employed. The position of the first and second cooling surfaces allow for the surfaces to serve their purpose and function as described above.

For the purpose of clarity and a concise description features are described herein as part of the same or separate embodiments, however, it will be appreciated that the scope of the invention may include embodiments having combinations of all or some of the features described.

The present invention can be illustrated by the following nonlimiting examples.

### Example 1

A mixture of LLDPE and LDPE (10 g) is dissolved in 110 ml MTBE/cyclopentane at 150°C/6.5 bar to obtain a polyolefin solution. The solution is gradually cooled to 90 °C using a cold-finger (*i.e.* the first cooling surface) of 90 °C and a cooled vessel wall (*i.e.* the second cooling surface) of higher than 90 °C. It is estimated that at a temperature of the mixture of around 95 °C, LLDPE starts to precipitate on the cold-finger. After further cooling, the solution is drained from the vessel to yield the LDPE rich fraction.

### Example 2

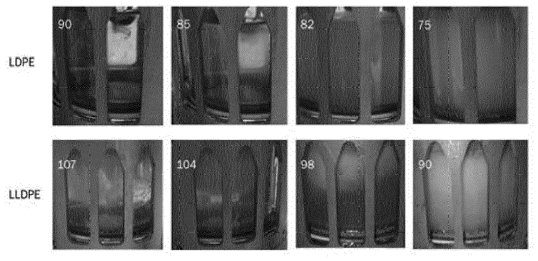

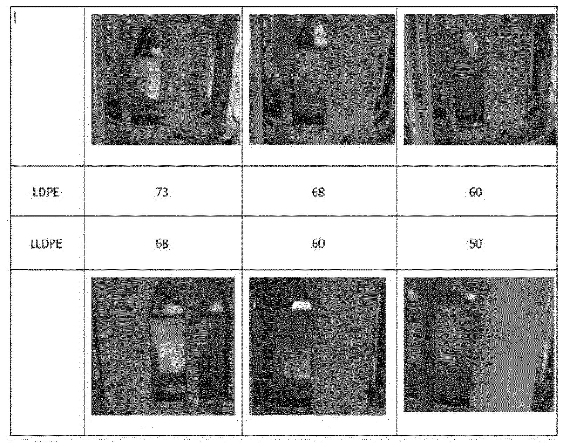

The difference in precipitation temperatures of LLDPE and LDPE in MBTE and cyclopentane was determined. The results can be seen in Figures 2 and 3, respectively, where the numbers indicate degree Celsius. Figure 2 shows that LDPE starts to precipitate at 98 °C in MTBE, while LDPE starts to precipitate at only 82 °C.

Figure 3 illustrates that the difference in precipitation temperature is smaller and about 10 °C.

## Claims

1. Method for at least partially separating a first and a second polyolefin from plastic waste, wherein said method comprises:
- dissolving the first and second polyolefin in a first solvent at an elevated temperature to obtain a polyolefin solution;
- cooling the polyolefin solution using at least a first and a second cooling surface, wherein the first cooling surface has a lower temperature than the precipitation temperature of the first polyolefin and wherein the second cooling surface has a higher temperature than the precipitation temperature of the first polyolefin;
- precipitating the first polyolefin on the first cooling surface;
- separating the precipitated first polyolefin from the polyolefin solution to obtain a first-polyolefin rich fraction and a second-polyolefin rich fraction.

2. Method according to the previous claim, further comprising recovering the second polyolefin from the second-polyolefin rich fraction, preferably by substantially removing the first solvent, preferably by evaporation.

3. Method according to any of the previous claims, further comprising recovering the first polyolefin from the first-polyolefin rich fraction, preferably by dissolving the first-polyolefin rich fraction in a second solvent at an elevated temperature followed by substantially removing said second solvent, preferably by evaporation.

4. Method according to any of the previous claims, wherein said plastic waste further comprises a non-soluble fraction and wherein said method further comprises removing said non-soluble fraction from the polyolefin solution.

5. Method according to any of the previous claims, wherein said plastic waste comprises multi-material composites, preferably multilayered foils, more preferably the plastic waste is according to the DKR-310 standard.

6. Method according to any of the previous claims, wherein the first and/or second solvent is a low-boiling solvent, preferably an apolar low-boiling solvent, more preferably the first and/or second solvent is selected from the group consisting of: MTBE and cyclopentane.

7. Method according to any of the previous claims wherein the first and/or second solvent is heated at elevated pressure.

8. Method according to any of the previous claims further comprising adding an anti-solvent before and/or during cooling of the polyolefin solution.

9. Method according to any of the previous claims wherein the at least first and second cooling surfaces have different surface dimensions, preferably wherein the surface area of the first cooling surface is smaller than the surface area of the second cooling surface, more preferably wherein the area ratio of the first and second cooling surfaces is smaller than 1:2, even more preferably smaller than 1:5.

10. Method according to any of the previous claims, wherein a continuous circulation is provided in the polyolefin solution, preferably by stirring.

11. Method according to any of the previous claims, wherein said first polyolefin is linear low density polyethylene (LLDPE) and said second polyolefin is low density polyethylene (LDPE) or wherein said first polyolefin is polypropylene and wherein said second polyolefin is polyethylene.

12. Method according to any of the previous claims, wherein the plastic waste is subjected to a pre-treatment step before and/or after dissolving the plastic waste.

13. Method according to any of the previous claims, wherein the temperature of the first cooling surface is between 5-10 °C below the precipitation temperature of the first polyolefin.

14. Method according to any of the previous claims, which method is carried out in a system (1) comprising a vessel (2) for holding a polyolefin solution (3), a first cooling surface (4) and a second cooling surface (5), wherein the first cooling surface is at least partially submerged in the polyolefin solution and wherein the second cooling surface at least partially, preferably entirely surrounds the polyolefin solution.
